# EUROPEAN PATENT APPLICATION

(11) **EP 2 043 230 A2**
(43) Date of publication of application: **01.04.2009**
(21) Application number: 08154361.3
(22) Date of filing: 11.04.2008
(51) Int. Cl.: H02K 1/18, H02K 1/27, H02K 21/24, H02K 3/47

(54) **Axial gap motor**

(30) Priority: 27.09.2007 CN 200710056110
(71) Applicant: Chen, Chuan Sheng, Taipei (TW)
(72) Inventor: Chen, Chuan Sheng, Taipei (TW)
(74) Representative: Carpintero Lopez, Francisco

(57) **Abstract**

An axial-gap motor includes an insulator disk (1), a plurality of magnets (2), a plurality of electromagnets (3), a casing (4), and an electromagnetism circuit (5). The magnets (2) are uniformly embedded in the insulator disk (1), and the electromagnets (3) are mounted to an inside surface of the casing (4). The electromagnetism circuit (5) includes an electromagnetic switch comprising a PNP contact controlling the supply of an external electrical power to a predetermined node and further to the electromagnets (3) to induce magnetic polarity for causing magnetic repulsion, and cutting off the power supply by the electromagnetic switch induces magnetic attraction, so that the insulator disk (1) is rotated by the magnetic attraction and repulsion caused between the electromagnetism generated by the electromagnets (3) and the magnets (2) inside the insulator disk (1). The kinetic energy of the rotating insulator disk (1) is usable thorough the rotary shaft (11) to function as motor.

## Description

### BACKGROUND OF THE INVENTION

### (a) Technical Field of the Invention

The present invention relates to the field of electrical motor, and in particular to a coil-less motor that is caused to rotate by means of the magnetic polarity and the induction of an electromagnetic switch so that no wire winding around an iron core is needed.

### (b) Description of the Prior Art

A conventional electrical motor includes an essential construction consisting at least one enameled wire winding around an iron core, cooperating with magnets and carbon brushes to realize rotation and output of torque. Such a conventional electrical motor is extremely power consuming, especially at the starting moment when the motor is just about to rotate from a standstill condition. Further, the conventional motor, which comprises enameled wire winding around an iron core as the essential construction, requires a casing of iron casting, which is not only bulky, but also difficult to maintain, and is of high costs. In addition, the rotation of the motor caused by switching of magnetic polarity, which is realized by switching of positive and negative electrodes. Thus, the conventional electrical motor is always of a bulky cylindrical configuration that has not been changed for a long time. Further, the conventional electrical motor cannot serve as an idle-speed motor, without the aid of other mechanisms or components, so that it imposes undesired constraints to the design of devices or objects that use electrical motors as a power source.

Thus, it is desired to provide a coil-less motor that overcomes the drawbacks of the conventional electrical motors.

### SUMMARY OF THE INVENTION

The primary purpose of the present invention is to provide a coil-less motor having a construction that is formed by including an insulator disk, a plurality of magnets, a plurality of electromagnets, a casing, and an electromagnetism circuit. The magnets are uniformly embedded in the insulator disk, such as being embedded in the plastics that make an injection-molded insulator disk. The electromagnets are mounted to an inside surface of the casing and oppose the magnets. The electromagnetism circuit comprises an electromagnetic switch comprising a PNP contact controlling the supply of an external electrical power to a predetermined node and further to the electromagnets to induce magnetic polarity for causing magnetic repulsion between the magnets and the electromagnets, and cutting off the power supply by the electromagnetic switch induces magnetic attraction between the magnets and the electromagnets. The insulator disk is rotated by the magnetic attraction and repulsion caused between the electromagnetism generated by the electromagnets and the magnets inside the insulator disk. The kinetic energy of the rotating insulator disk is outputted through the rotary shaft to realize the function of a motor. The coil-less motor is simple in structure and light in weight, and requires no enameled wire winding around an iron core and uses no bulky iron-cast casing so that the configuration of the motor is light and thin and the applications thereof are expanded to various objects and devices that require mechanical power. The simplified construction of the coil-less motor of the present invention is further advantageous in reduced power consumption and easy installation and maintenance.

The foregoing object and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

Figure 1 is an exploded view of a coil-less motor constructed in accordance with the present invention;
Figure 2 is a perspective view of the coil-less motor of the present invention in an assembled form;
Figure 3 is a cross-sectional view of the coil-less motor of the present invention in the assembled form; and
Figure 4 is a circuit diagram of an electromagnetism circuit of the coil-less motor in accordance with the present invention.

### DETAILED DESCRIPTION OF THE PREFERRED EMBODIMENTS

The following descriptions are of exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

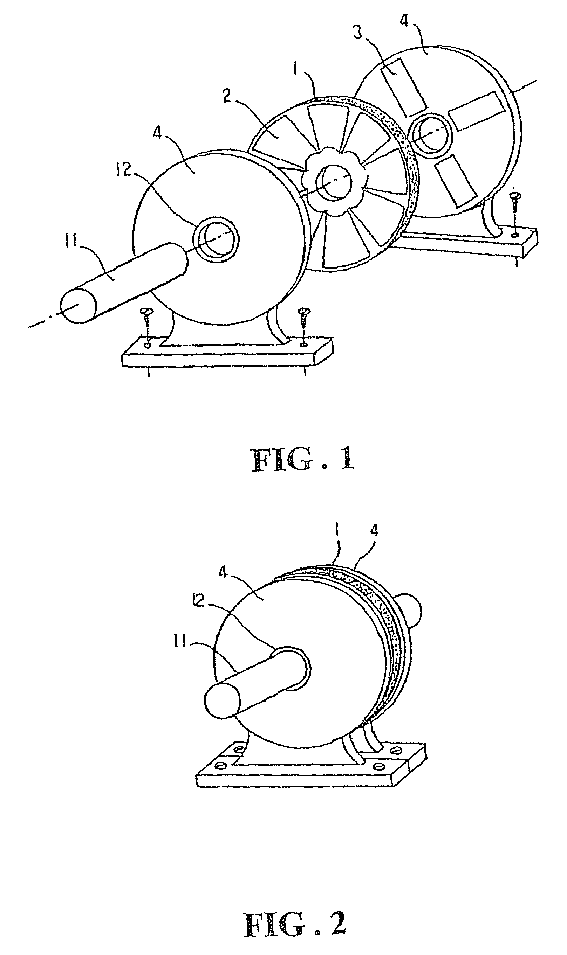

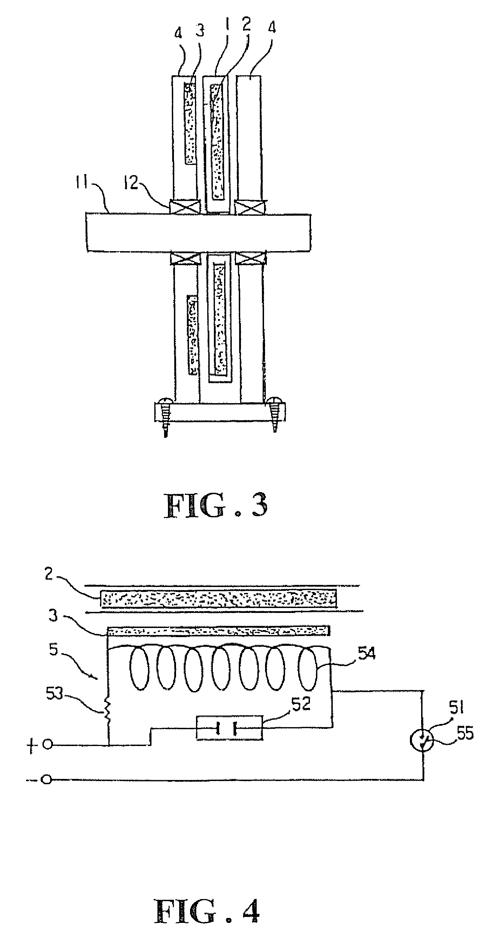

With reference to the drawings and in particular to Figures 1-4, a coil-less motor constructed in accordance with the present invention comprises an insulator disk 1, a plurality of magnets 2, a plurality of electromagnets 3, a casing comprised of opposite cover members 4, and an electromagnetism circuit 5 in electrical connection with the electromagnets 3.

The insulator disk 1 is made of an insulation material by any known means, such as an injection-molded plastic disk. The insulator disk 1 forms a central bore (not labeled) fit over and secured to a rotary shaft 11. The magnets 2 are embedded in the insulator disk 1 in a regularly distributed manner. For an injection-molded plastic disk, the magnets 2 can be integrally embedded in the plastics that make the disk 1 during the molding process thereof. The rotary shaft 11 has opposite end sections extends through and are respectively supported by bearings 12 that are mounted to the cover members 4 of the casing. Each cover member 4 has an inside face to which the electromagnets 3 are mounted in a substantially and regularly distributed manner so that the electromagnets 3 oppose the magnets 2 embedded in the disk 1. It is apparent that the electromagnets 3 may be mounted to only one of the cover members 4, rather than both, but it is preferred that both cover members 4 are provided with the electromagnets 3.

The electromagnetism circuit 5 comprises an electromagnetic switch 51, a capacitor 52, a resistor 53, and a coil 54. The electromagnetic switch 51 comprises a PNP contact 55. When power is supplied, an electric current is induced and the current is controlled by the electromagnetic switch PNP contact 55 to flow through a predetermined node and the coil 54 and is further applied to the electromagnets 3 to induce magnetic polarity in each electromagnet 3, thereby causing attraction/repulsion between magnetic fields of the electromagnets 3 and the magnets 2; and when power supplied through the electromagnetic switch 51 to the electromagnets 3 is cut off by the switch 51, repulsion/attraction of the magnetic fields is induced.

The insulator disk 1 is rotated by the magnetic attraction/repulsion caused between the magnetism of the electromagnets 3 and the magnetic fields of the magnets 2 embedded in the insulator disk 1. Kinetic energy of the rotation of the insulator disk 1 is outputted through the rotary shaft 11 to realize the operation of the coil-less motor in accordance with the present invention.

In a practical application, the electromagnetic switch PNP contact 55 can be a platinum contact, which is used to induce attraction and/or repulsion between the magnets and the electromagnets in order to cause the rotation of the insulator disk 1.

It is known from the above description that the coil-less motor in accordance with the present invention requires no enameled wire wound around an iron core and eliminates a bulky and heavy outer casing made of casting iron. This makes the motor light and thin and thus expands the applicability of the motor to various fields and/or devices and machines that require rotary power.

An example of the application of the coil-less motor of the present invention is that the coil-less motor is mounted to a wheel of a bicycle to make the bicycle a power or electrical bicycle. In such a power bicycle, the magnets of the coil-less motor are set in the form of circular disks, just like a disk brake for automobile, and the circular disk magnets are mounted to a front wheel of the bicycle at locations corresponding to a front fork to be rotatable in unison with the wheel. The electromagnets of the coil-less motor are arranged, as a sub-assembly, by the side of the magnet disk and electrical wires extending from the electromagnets are set along the front fork of the bicycle to a location just below a handlebar to connect to for example a battery with the electromagnetic switch arranged on/by the handlebar to be accessible by a user's hand. In this way, a simple-structured power bicycle is completed. When the user uses his or her hand to actuate the electromagnetic switch, magnetic attraction/repulsion is induced between the magnets and the electromagnets, which causes the circular disk magnets to drive the rotation of the rotary shaft and thus the wheel. Such a power bicycle has a simple structure and the motor can be installed to the bicycle very easily and the motor is thin and light and supply a great power with less consumption of electrical power. Thus, no complicated coupling and transmission is needed for installation and use, which further provides the advantage of easy maintenance and easy operation. No excessive power load is required for the starting of the bicycle and no unexpected rushing may occur. For a conventional motor, the power load at the starting is very large, but a power bicycle must be started with very slow speeds, which cannot be met by the conventional motor for the conventional motor must be started with large power consumption and thus a fast-accelerated speed. The coil-less motor of the present invention, on the contrary, allows for slow speed at the starting stage for driving or moving any devices or objects.

Another example of application of the coil-less motor of the present invention is an electric fan. An electric fan uses an electric motor to drive a blade set for generating air flows. Thus, the overall configuration of the electric fan cannot be reduced to a thin and light construction. The coil-less motor of the present invention, once employed in the electric fan, allows the configuration of the electrical fan to be light and thin and the overall configuration to be more aesthetic and consumer appealing.

A further application of the coil-less motor of the present invention is a kitchen hood or air bower, which is commonly used in for example a factory or for household. The conventional air blower or kitchen hood employs a motor to drive a blade set for suction or drawing of air. Thus, the conventional construction of the air blower or the kitchen hood has a bulky size and a great overall thickness, which make the installation difficult and also impose a limitation to the site where the air blower or the kitchen is to be mounted. On the other hand, the coil-less motor of the present invention, once used in an air blower or a kitchen hood, makes the air blower or kitchen thin and light and further ease the installation and maintenance thereof and provides the devices with a more aesthetic and consumer appealing outside looking.

Apparently, due to the light and thin configuration, the coil-less motor of the present invention can be employed in for example a kitchen hood or any other devices or machines that require removal of heat or generation of air flow, such as a computer heat dissipation device, a heat dissipation fan for an air conditioner, an automobile radiator system, a heat dissipation fan for an automobile air conditioner, and an air blower. The present invention not only changes the traditional outer configuration for motors, but also improves power consumption and wear of the conventional motors.

To conclude, the present invention provides a coil-less motor that requires no enameled wire winding around an iron core, which, being a break to the conventional motor construction, is simple in structure and low in costs and has enhance performance for wide applications. In addition, installation and maintenance are simplified as compared to the conventional motors.

Although the present invention has been described with reference to the preferred embodiment and practical applications thereof, it is apparent to those skilled in the art that a variety of modifications and changes may be made without departing from the scope of the present invention which is intended to be defined by the appended claims.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A coil-less motor having no wire winding around an iron core, comprising an insulator disk, a plurality of magnets, a plurality of electromagnets, a casing, and an electromagnetism circuit, wherein the magnets are uniformly embedded in the insulator disk, and the insulator disk is coupled to a rotary shaft to rotatably support the insulator disk on the casing, the electromagnets being mounted to an inside surface of the casing, the electromagnetism circuit comprising an electromagnetic switch comprising a PNP contact adapted to control an external electrical power in order to supply electrical power to the electromagnets to induce magnetic polarity for causing magnetic attraction/repulsion, selectively cut off the power supply by the electromagnetic switch inducing magnetic repulsion/attraction, so that the insulator disk is rotated by the magnetic attraction/repulsion and kinetic energy of the rotating insulator disk is outputted through the rotary shaft to realize the function of a motor.

2. The coil-less motor as claimed in Claim 1, wherein the magnets are uniformly embedded in the insulator disk and the electromagnets are mounted to the inside surface of the casing and oppose the magnets.

3. The coil-less motor as claimed in Claim 1, wherein the electromagnetism circuit comprises an electromagnetic switch, a capacitor, a resistor, and a coil, the electromagnetic switch comprising a PNP contact, which is connected to the electromagnets through the coil, the external electrical power being controlled by the PNP contact to supply to the electromagnets for inducing the magnetic polarity.

4. The coil-less motor as claimed in Claim 1, wherein the electromagnetism circuit comprises a platinum contact for inducing magnetic attraction/repulsion between the magnets and the electromagnets.
